# EUROPÄISCHE PATENTSCHRIFT

(11) **EP 0 428 114 B1**
(45) Veröffentlichungstag und Bekanntmachung des Hinweises auf die Patenterteilung: **04.05.1994**
(21) Anmeldenummer: 90121643.2
(22) Anmeldetag: 12.11.1990
(51) Int. Cl.: B60P 1/64, B65D 90/24

(54) **Fahrzeug zum Aufnehmen und Transportieren von Containern**
Vehicle for taking up and transporting of containers
Véhicule pour lever et transporter des conteneurs

(30) Priorität: 14.11.1989 DE 3937823
(43) Veröffentlichungstag der Anmeldung: 22.05.1991
(73) Patentinhaber: Kreuzer, Jörg, Dipl.-Volkswirt, D-53819 Neunkirchen-Seelscheid (DE); Sistig, Kurt, Dipl.-Ing., D-53804 Much (DE)
(72) Erfinder: Kreuzer, Jörg, Dipl.-Volkswirt, D-53819 Neunkirchen-Seelscheid (DE); Sistig, Kurt, Dipl.-Ing., D-53804 Much (DE)
(74) Vertreter: Nau, Walter, Dipl.-Ing.

(56) Entgegenhaltungen:
- GB-A- 2 041 776
- US-A- 1 704 917
- US-A- 2 313 514
- US-A- 3 198 355
- US-A- 3 961 717

## Beschreibung

Die Erfindung bezieht sich auf ein Fahrzeug zum Aufnehmen und Absetzen sowie zum Transportieren von Containern, in denen das Erdreich schädigende Materialien enthalten sind, wobei die fahrzeugseitige Einrichtung einen Rahmen mit schwenkbaren Hubarmen und vorzugsweise einen schwenkbaren Fanghaken in der Nähe der Achse der Hubarme aufweist.

Ein derartiges Fahrzeug ist aus der US-A 2,313,514 bekannt. Dieses Fahrzeug ist als selbstfahrender Lastkraftwagen ausgebildet, kann aber auch ein Anhänger sein. Auf die Ausgestaltung des Fahrzeuges kommt es jedoch in Verbindung mit der vorliegenden Erfindung nicht an, sondern lediglich darauf, daß das Fahrzeug - wie in der US-A 2,313,514 offenbart - einen Rahmen aufweist, an dem Hubarme schwenkbar gelagert sind,die normalerweise über Ketten Container aufnehmen und auf dem Fahrzeug bzw. Rahmen absetzen. Um auch höhere Lasten aufnehmen zu können, weist der Rahmen in der Nähe der Drehachse der Hubarme ausfahrbare Stützen auf, die unzulässige Einfederungen des Rahmens bzw. Belastungen der Tragachse des Fahrzeuges beim Aufnehmen des Containers verhindern.

Der Rahmen des Fahrzeuges weist in der Nähe der Drehachse der Hubarme einen bzw. mehrere Fanghaken auf, mit denen der Container an einem Ende festgehalten werden kann, so daß ein Kippen um den bzw. die Angriffspunkte der Fanghaken möglich ist.

Aufgabe der vorliegenden Erfindung ist es, ein Fahrzeug der vorbeschriebenen Art, welches zur Aufnahme von Containern geeignet ist, die das Erdreich verunreinigende Materialien, z.B. Schrottspäne mit anhaftendem Bohröl enthalten, wobei die Container - sei es konstruktiv ausgelegt oder durch starke Benutzung hervorgerufen - Öffnungen aufweisen, durch die das Bohröl auslaufen kann, so auszubilden, daß die das Erdreichen schädigenden Materialien aufgefangen werden können.

Die Aufgabe der Erfindung wird dadurch gelöst, daß innerhalb des Rahmens und in Verlängerung des Rahmens im fahrzeugfernen Schwenkbereich der Hubarme eine wannenförmige Auffangeinrichtung vorgesehen ist. In dieser Auffangeinrichtung sammelt sich das herabtropfende oder herauslaufende Bohröl oder sonstige das Erdreich schädigende Materialien, so daß beim Anheben des Containers, beim Transport des Containers und beim Absetzen keine schädigenden Materialien in das Erdreich bzw. die Umgebung gelangen.

In vorteilhafter Weise weist die wannenförmige Auffangeinrichtung zumindest eine Abflußöffnung auf, die mit einem Auffangbehälter verbunden ist. Dadurch ist es auch möglich, größere Mengen sicher zu entsorgen, so daß nicht bei jeder Fahrt und bei kleineren Mengen bereits eine Entleerung bzw. Säuberung der Auffangeinrichtung erfolgen muß. Der Auffangbehälter hat dabei in vorteilhafter Weise eine Entleerungspumpe, so daß das Entsorgungsfahrzeug an dafür vorgesehenen Deponien die Materialien abliefern kann.

In vorteilhafter Weise ist zwischen Auffangbehälter und Abflußöffnung ein Ventil oder Hahn vorgesehen, der mittels einer Fernbedienung geöffnet wird, wenn der Container aufgenommen wird. Die Fernbedienung kann mit der Federung der Tragachse des Fahrzeugs verbunden sein oder einen Betätigungsbolzen aufweisen, der im Bereich der Absetzfläche des Containers auf dem Fahrzeug angeordnet ist. Das Ventil bzw. der Hahn wird geöffnet, wenn der Container aufgenommen wird. Sonst ist es bzw. er, z.B. mittels einer Feder, geschlossen, damit der Auffangbehälter nicht volläuft, wenn das Fahrzeug, z.B. im Regen steht.

Da während des Aufnehmens und Absetzens eines Containers auch außerhalb des Rahmens bzw. außerhalb der Drehachse der Hubarme Öl abtropfen bzw. herauslaufen kann, wird erfindungsgemäß vorgeschlagen, daß in Verlängerung des Rahmens im fahrzeugfernen Schwenkbereich der Hubarme eine schwenkbare Auffangklappe vorgesehen ist, die an ihrem fahrzeugfernen Rand eine Auffangrinne aufweist. Der Schwenkmechanismus der Auffangklappe kann dabei in vorteilhafter Weise zur Schwenkbewegung der Hubarme synchron ausgelegt sein, so daß die Auffangklappe zwischen einer schräg nach unten und einer schräg nach oben verlaufenden Stellung schwenkbar ist. Die Schwenkbewegung kann dabei sowohl hydraulisch als auch mechanisch mit der Schwenkbewegung der Hubarme kombiniert sein, so daß die Auffangklappe wie eine Schürze nach außen reicht, wenn ein Container aufgenommen werden soll und selbsttätig nach oben klappt, wenn der Container auf dem Fahrzeug bzw. dem Rahmen abgesetzt ist. In der schräg nach unten verlaufenden Stellung kann die Auffangklappe herabtropfende Materialien auffangen und ggf. in der Auffangrinne sammeln, die selbstverständlich an ihren Enden verschlossen ist, damit z.B. das Bohröl nicht herauslaufen kann. Beim Anheben der Auffangklappe läuft dann die Flüssigkeit zurück und sammelt sich in der trichterförmigen Auffangeinrichtung innerhalb des Rahmens des Fahrzeuges und wird im Auffangbehälter gesammelt. Weist das Fahrzeug, wie bereits beschrieben einen Fanghaken auf, so ist die Auffangklappe vorzugsweise mit einer Öffnung ausgestattet, durch die der Fanghaken hindurchreicht. Dabei ist die Öffnung zumindest am fahrzeugnahen und fahrzeugfernen Rand ebenfalls mit einer Rinne versehen, so daß aufgefangene Materialien nicht durch die Öffnung herauslaufen und in das Erdreich gelangen können.

Da der Fanghaken schwenkbar bzw. steuerbar ist, bietet es sich an, mittels der Bewegung des Fanghakens auch die Auffangklappe hoch und herunter zu bewegen. In vorteilhafter Weise ist daher zumindest am fahrzeugnahen Rand der Öffnung der Auffangklappe eine Rolle gelagert, die an der zugehörigen Seite des Fanghakens anliegt. Selbstverständlich kann auch an der gegenüberliegenden Seite der Öffnung eine Rolle vorgesehen sein. Die Rolle bzw. Rollen treten bei der Bewegung des Fanghakens nunmehr an den Seitenflächen desselben in Wirkverbindung, so daß beim Schwenken des Fanghakens auch die Auffangklappe auf- und abwärtsbewegt wird.

Zur weiteren Erläuterung der Erfindung wird auf die Zeichnungen verwiesen, in denen ein Ausführungsbeispiel der Erfindung vereinfacht dargestellt ist. Es zeigen:
- Fig. 1: eine perspektivische Darstellung eines Teils des Fahrzeuges mit Blick in die Auffangeinrichtung innerhalb des Rahmens
- Fig. 2 und 3: eine Teilansicht des Rahmens mit einem Fanghaken und einer Auffangklappe und
- Fig. 4: eine Teilrückansicht auf das Fahrzeug mit angehobener Auffangklappe.

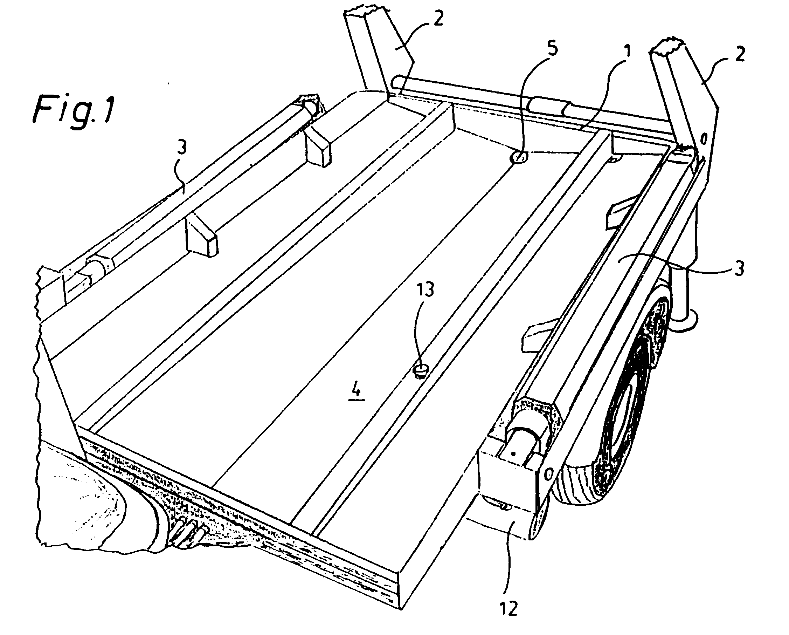

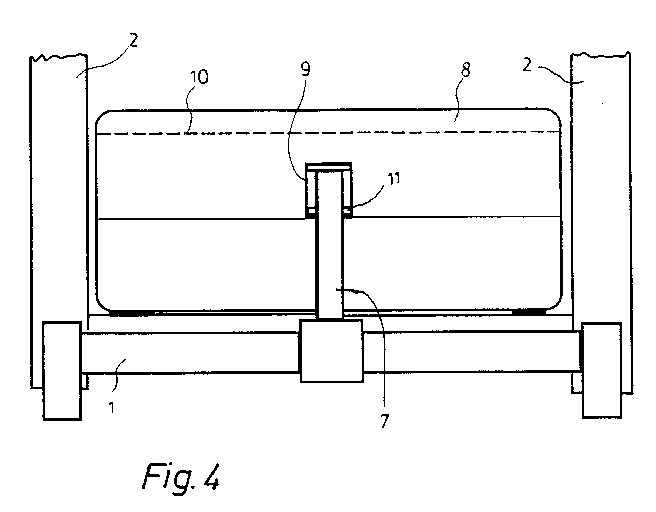

In den Fig. 1 bis 4 ist, soweit im einzelnen dargestellt, mit 1 ein Rahmen bezeichnet, der auf bzw. an einem Fahrzeug befestigt ist. An dem Rahmen sind Hubarme 2 über Hydraulikzylinder 3 schwenkbar gelagert, die in üblicherweise zur Aufnahme und zum Absetzen eines Containers auf einem Abstellplatz bzw. auf dem Rahmen 1 des Fahrzeuges ausgebildet sind. Innerhalb des Rahmens ist eine trichterförmige Auffangeinrichtung 4 vorgesehen, die dichtend am Rahmen befestigt ist. Die Auffangeinrichtung weist eine Abflußöffnung 5 auf, die über eine Leitung 6 mit einem Auffangbehälter 12 verbunden ist. Der Auffangbehälter 12 ist am Fahrzeug befestigt und kann über eine Pumpe entleert bzw. entsorgt werden oder aber auch zum Entsorgen ausgewechselt werden. An der Oberseits des Rahmens 1, dort wo der Container abgesetzt wird, ragt ein Betätigungsbolzen 13 aus der Oberfläche hervor. Der Betätigungsbolzen 13 steht über eine Fernbedienung mit einem nicht dargestellten Ventil oder Hahn in der Leitung 6 in Verbindung. In der dargestellten Stellung ist das Ventil bzw. der Hahn mittels einer Feder geschlossen, damit der Auffangbehälter 12 nicht unbeabsichtigt vollaufen kann. Drückt ein aufgenommener Container den Betätigungsbolzen herunter, so wird das Ventil bzw. der Hahn geöffnet.

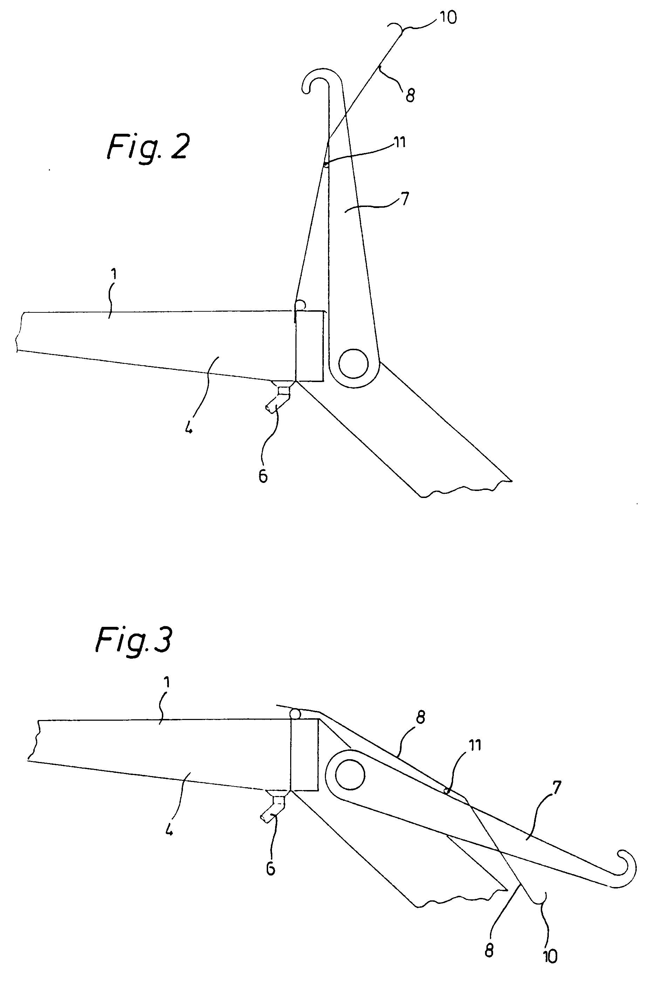

Wie insbesondere den Fig. 2 bis 4 zu entnehmen ist, ist am rückwärtigen Ende des Rahmens 1 ein Fanghaken 7 schwenkbar gelagert, der in bekannter Weise zum Arretieren eines En des des Containers in Verbindung mit dem Kippen desselben dient. Am Ende des Rahmens 1, in der Nähe des Fanghakens 7 ist eine Auffangklappe 8 schwenkbar gelagert, die eine Öffnung 9 aufweist, durch die der Fanghaken 7 hindurchragt. Die Auffangklappe 8 weist an ihrem fahrzeugfernen Ende eine Auffangrinne 10 auf. In vorteilhafter Weise sind auch die seitlichen Ränder der Auffangklappe mit Auffangrinnen versehen, ebenfalls auch die Ränder der Öffnung 9, so daß sowohl in der herabgelassenen Stellung der Auffangklappe als auch in der angehobenen Stellung Flüssigkeiten oder sonstige Materialien nicht von der Auffangklappe herunterlaufen können, sondern mit Sicherheit beim Hochklappen der Auffangklappe 8 in die Auffangeinrichtung 4 innerhalb des Rahmens fließen bzw. rollen. Wie insbesondere in den Fig. 2 und 3 dargestellt, weist die Auffangklappe 8 zumindest an dem fahrzeugzugewandten Rand der Öffnung 9 eine Rolle 11 auf, durch die die Auffangklappe 8 bei der Schwenkbewegung des Fanghakens 7 gleichzeitig hochgeklappt wird, da in der anderen Bewegungsrichtung das Eigengewicht der Auffangklappe ein Herunterklappen beim Ablassen des Fanghakens bewirkt.

Durch diese Ausgestaltung ist sichergestellt, daß sowohl während des Aufnehmens als auch während des Absetzens und während des Transports besagter Container aus diesen heraustretende Flüssigkeiten nicht in das Erdreich gelangen, sondern sicher entsorgt werden können.

## Patentansprüche

1. Fahrzeug zum Aufnehmen und Absetzen sowie zum Transportieren von Containern, in denen das Erdreich schädigende Materialien enthalten sind, wobei die fahrzeugseitige Einrichtung einen Rahmen (1) mit schwenkbaren Hubarmen (2) und vorzugsweise einen schwenkbaren Fanghaken (7) in der Nähe der Drehachse der Hubarme (2) aufweist,
dadurch gekennzeichnet, daß innerhalb des Rahmens (1) und in Verlängerung des Rahmens (1) im fahrzeugfernen Schwenkbereich der Hubarme (2) eine wannenförmige Auffangeinrichtung (4) zum Sammeln von das Erdreich schädigenden flüssigen Materialien vorgesehen ist.

2. Fahrzeug nach Anspruch 1,
dadurch gekennzeichnet, daß die wannenförmige Auffangeinrichtung (4) zumindest eine Abflußöffnung (5) aufweist, die mit einem Auffangbehälter (12) verbunden ist.

3. Fahrzeug nach einem der Ansprüche 1 oder 2,
dadurch gekennzeichnet, daß der Auffangbehälter (12) eine Entleerungspumpe aufweist.

4. Fahrzeug nach einem der vorhergehenden Ansprüche,
dadurch gekennzeichnet, daß zwischen Abflußöffnung (5) und Auffangbehälter (12) ein Ventil oder Hahn angeordnet und mit einer Ferndebienung derart verbunden ist, daß bei der Aufnahme des Containers das Ventil bzw. der Hahn von der Schließstellung in die Öffnungsstellung verstellt wird.

5. Fahrzeug nach einem der vorhergehenden Ansprüche,
dadurch gekennzeichnet, daß in Verlängerung des Rahmens (1) im fahrzeugfernen Schwenkbereich der Hubarme (2) eine schwenkbare Auffangklappe (8) vorgesehen ist, die an ihrem fahrzeugfernen Ende eine Auffangrinne (10) aufweist.

6. Fahrzeug nach einem der vorhergehenden Ansprüche,
dadurch gekennzeichnet, daß der Schwenkmechanismus der Auffangklappe (8) synchron zur Schwenkbewegung der Hubarme (2) ausgelegt ist.

7. Fahrzeug nach einem der vorhergehenden Ansprüche,
dadurch gekennzeichnet, daß die Auffangklappe (8) um etwa 90° zwischen einer schräg nach unten und schräg nach oben weisenden Stellung schwenkbar ist.

8. Fahrzeug nach einem der vorhergehenden Ansprüche,
dadurch gekennzeichnet, daß die Auffangklappe (8) - wenn ein Fanghaken (7) vorgesehen ist - eine Öffnung (9) aufweist, durch die der Fanghaken (7) hindurchreicht.

9. Fahrzeug nach einem der vorhergehenden Ansprüche,
dadurch gekennzeichnet, daß die Öffnung (9) zumindest am fahrzeugnahen und fahrzeugfernen Rand Rinnen aufweist.

10. Fahrzeug nach einem der vorhergehenden Ansprüche,
dadurch gekennzeichnet, daß zumindest am fahrzeugnahen Rand der Öffnung (9) eine Rolle (11) gelagert ist, die an einer Seite des Fanghakens (7) anliegt.

## Claims

1. A vehicle for the taking up, setting down and transporting of containers which contain materials damaging to the soil, wherein the vehicle has a frame (1) with swivelling lifting arms (2) and, advantageously, a swivelling catch hook (7) in the proximity of the axis of rotation of the lifting arms (2),
characterised in that a trough-like collecting device (4) to collect fluid materials damaging to the soil is provided within the frame (1) and extends longitudinally of the frame (1) to the swivel-region of the lifting arms (2) remote from the vehicle.

2. A vehicle according to claim 1,
characterised in that the trough-like collecting device (4) has at least one discharge outlet (5) leading to a collecting vessel (12).

3. A vehicle according to either claim 1 or 2,
characterised in that the collecting vessel (12) has an emptying pump.

4. A vehicle according to any one of the preceding claims,
characterised in that a valve or cock is arranged between the discharge outlet (5) and the collecting vessel (12) and is connected to a remote control such that the valve or cock is switched from the closed position to the open position on take-up of the container.

5. A vehicle according to any one of the preceding claims,
characterised in that a swivel-mounted collecting flap (8) is provided longitudinally of the frame (1) in the swivel region of the lifting arms (2) remote from the vehicle, the said collecting flap (8) being provided at that end remote from the vehicle with a collecting channel (10).

6. A vehicle according to any one of the preceding claims,
characterised in that the swivel mechanism of the collecting flap (8) is synchronous with the swivel movement of the lifting arms (8).

7. A vehicle according to any one of the preceding claims,
characterised in that the collecting flap (8) is swivellable through approximately 90° between a downward sloping position and an upward sloping position.

8. A vehicle according to any one of the preceding claims,
characterised in that the collecting flap (8) - if a catch hook (7) is provided - has an opening (9) through which the catch hook (7) projects.

9. A vehicle according to any one of the preceding claims,
characterised in that the opening (9) is provided with channels, at least at that edge remote from, and that edge adjacent to, the vehicle.

10. A vehicle according to any one of the preceding claims,
characterised in that a roller (11) is positioned at least on the edge of the opening (9) adjacent to the vehicle and abuts against one side of the catch hook (7).

## Revendications

1. Véhicule pour charger et déposer ainsi que pour transporter des conteneurs, dans lesquels sont contenues des matières nocives pour la terre, véhicule dans lequel le dispositif situé du côté du véhicule présente un cadre (1) avec des bras de levage qui peuvent pivoter (2) et de préférence un crochet de préhension (7) qui peut pivoter à proximité de l'axe de rotation des bras de levage (2), véhicule caractérisé en ce qu'à l'intérieur du cadre (1) et dans le prolongement du cadre (1) on prévoit dans la zone de pivotement, éloignée du véhicule, des bras de levage (2) un dispositif récepteur en forme de cuvette (4) servant à rassembler des matières liquides nocives pour la terre.

2. Véhicule selon la revendication 1, caractérisé en ce que le dispositif récepteur (4) en forme de cuvette présente au poins une ouverture d'écoulement (5), qui est reliée à un réservoir collecteur (12).

3. Véhicule selon l'une des revendications 1 ou 2, caractérisé en ce que le réservoir collecteur (12) présente une pompe de vidange.

4. Véhicule selon l'une des revendications précédentes, caractérisé en ce qu'entre l'ouverture d'écoulement (5) et le réservoir collecteur (12), on dispose une vanne ou un robinet et on les relie à une télécommande, de telle façon que lors du chargement du conteneur, la vanne ou le robinet est mis de la position fermée à la position d'ouverture.

5. Véhicule selon l'une des revendications précédentes, caractérisé en ce que dans le prolongement du cadre (1), on prévoit dans la zone de pivotement éloignée du véhicule, des bras de levage (2) un volet récepteur qui peut pivoter (8), qui présente à son extrémité éloignée du véhicule une gouttière collectrice (10).

6. Véhicule selon l'une des revendications précédentes, caractérisé en ce que le mécanisme de pivotement du volet récepteur (8) est conçu de façon à fonctionner de façon synchrone avec le mouvement de pivotement des bras de levage (2).

7. Véhicule selon l'une des revendications précédentes, caractérisé en ce que le volet récepteur (8) peut pivoter d'environ 90° entre une position orientée obliquement vers le bas et une position orientée obliquement vers le haut.

8. Véhicule selon l'une des revendications précédentes, caractérisé en ce que le volet récepteur (8) - quand on prévoit un crochet de préhension (7) - présente une ouverture (9) à travers laquelle passe le crochet de préhension (7).

9. Véhicule selon l'une des revendications précédentes, caractérisé en ce que l'ouverture (9) présente au moins des gouttières sur le bord proche du véhicule et sur le bord éloigné du véhicule.

10. Véhicule selon l'une des revendications précédentes, caractérisé en ce qu'au moins sur le bord du véhicule de l'ouverture (9) est monté un galet (11) qui repose sur un côté du crochet de préhension (7).
